# EUROPEAN PATENT SPECIFICATION

(11) **EP 4 360 997 B1**
(45) Date of publication and mention of the grant of the patent: **13.05.2026**
(21) Application number: 22826644.1
(22) Date of filing: 09.02.2022
(51) Int. Cl.: B62D 5/04, B62D 6/10

(54) **STEERING DEVICE**
LENKVORRICHTUNG
DISPOSITIF DE DIRECTION

(30) Priority: 25.06.2021 WO PCT/JP2021/024115
(43) Date of publication of application: 01.05.2024
(73) Proprietor: JTEKT CORPORATION, Kariya-shi, Aichi-ken 448-8652 (JP)
(72) Inventor: KAWAMURA, Naofumi, Kariya-shi, Aichi-ken 448-8652 (JP); SUZUKI, Hiroaki, Kariya-shi, Aichi-ken 448-8652 (JP); EBISU, Tetsuya, Kariya-shi, Aichi-ken 448-8652 (JP); FUJIOKA, Yuki, Kariya-shi, Aichi-ken 448-8652 (JP); SUGIURA, Tomonori, Kariya-shi, Aichi-ken 448-8652 (JP); ITO, Kosuke, Kariya-shi, Aichi-ken 448-8652 (JP); BAITO, Takahiro, Kosai-shi, Shizuoka 431-0431 (JP); NAKAAKI, Takao, Kosai-shi, Shizuoka 431-0431 (JP); MURAKAMI, Yoshiaki, Kosai-shi, Shizuoka 431-0431 (JP); ASAKAWA, Kazuhisa, Yao-shi, Osaka 581-0091 (JP)
(74) Representative: Winter, Brandl - Partnerschaft mbB
(86) International application number: PCT/JP2022/005174
(87) International publication number: WO 2022/269986

(56) References cited:
- EP-A1- 2 308 743
- EP-A1- 2 921 372
- WO-A1-2014/069423
- JP-A- 2008 184 043
- JP-A- 2016 211 615

## Description

### TECHNICAL FIELD

The present disclosure relates to a steering device.

### BACKGROUND ART

Hitherto, there is an electric power steering system using a motor to assist steering. For example, a steering device of JP 2020-90 139 A includes a motor and a metal housing. The housing houses a torque sensor and a worm gear mechanism. The motor generates a torque based on a steering torque detected by the torque sensor. The torque of the motor is transmitted to a steering shaft via the worm gear mechanism.

The housing includes a worm housing member and a sensor housing member. The worm housing member houses the worm gear mechanism. The sensor housing member houses the torque sensor. The worm housing member and the sensor housing member are fitted together in an axial direction of the steering shaft. The steering shaft is supported via bearings so as to be rotatable relative to the worm housing member and the sensor housing member.

EP 2 921 372 A1 discloses a steering device according to the preamble of claim 1.

### SUMMARY OF THE INVENTION

### Problem to be Solved by the Invention

In recent years, customer demands for steering devices have become increasingly diverse based on vehicle specifications and other factors. In order to meet these demands, a wide range of research and development has been conducted on the configurations of steering devices. A steering device having a new configuration may be required.

### Means for Solving the Problem

A steering device according to an aspect of the present disclosure includes a cylindrical support tube that includes a flange and that rotatably supports a steering shaft, a speed reducer configured to apply a torque to the steering shaft, a housing that includes a cylindrical portion housing the speed reducer, the cylindrical portion being disposed coaxially with the flange, a bolt that couples the flange and the cylindrical portion to each other, a bearing support member that is fitted to an inner peripheral surface of the cylindrical portion and through which the steering shaft extends, and a bearing interposed between an outer peripheral surface of the steering shaft and an inner peripheral surface of the bearing support member. The bearing support member includes a deformation allowing portion configured to allow elastic deformation of the bearing support member in a radial direction.

### BRIEF DESCRIPTION OF THE DRAWINGS

[FIG. 1] FIG. 1 is a schematic diagram showing the configuration of a steering device according to an embodiment.
[FIG. 2] FIG. 2 is a perspective view of a steering column in FIG. 1.
[FIG. 3] FIG. 3 is a sectional view of a coupling portion between a housing and a lower tube in FIG. 2.
[FIG. 4] FIG. 4 is a perspective view of a bearing support member in FIG. 3 that is viewed diagonally from the top.
[FIG. 5] FIG. 5 is a perspective view of the bearing support member in FIG. 3 that is viewed diagonally from the bottom.
[FIG. 6] FIG. 6 is a sectional perspective view of the bearing support member in FIG. 3.
[FIG. 7] FIG. 7 is a sectional perspective view of the bearing support member in FIG. 3.
[FIG. 8] FIG. 8 is a sectional view of the bearing support member in FIG. 3.
[FIG. 9] FIG. 9 is a sectional view of a bearing support member according to another embodiment.
[FIG. 10] FIG. 10 is a sectional view of a bearing support member according to another embodiment.

### MODES FOR CARRYING OUT THE INVENTION

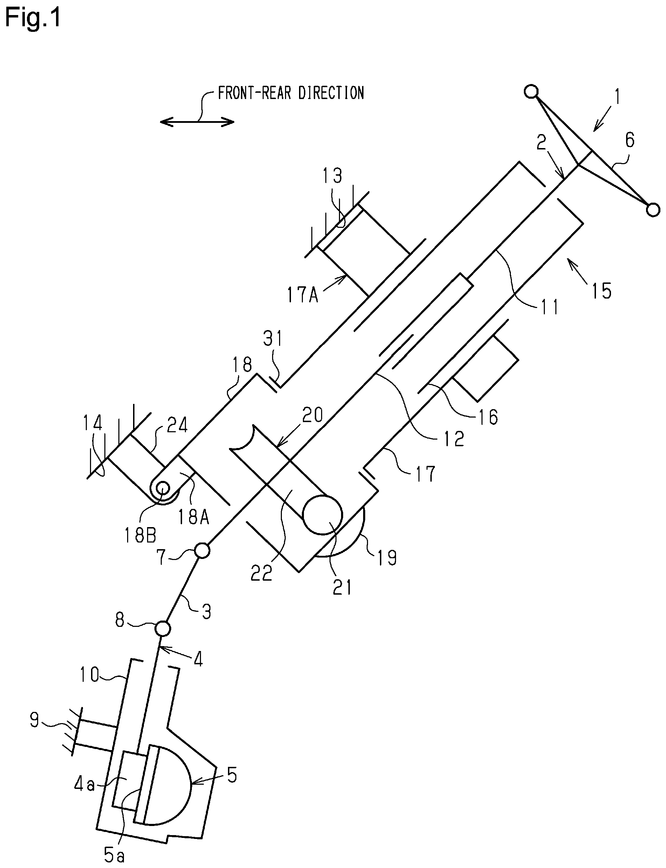

A steering device according to an embodiment will be described. As shown in FIG. 1, a steering device 1 includes a steering shaft 2, an intermediate shaft 3, a pinion shaft 4, and a rack shaft 5. A steering wheel 6 is coupled to a first end of the steering shaft 2. A first end of the intermediate shaft 3 is coupled to a second end of the steering shaft 2 via a universal joint 7. A first end of the pinion shaft 4 is coupled to a second end of the intermediate shaft 3 via a universal joint 8. A pinion 4a is provided at a second end of the pinion shaft 4. The pinion 4a meshes with a rack 5a provided on the rack shaft 5. The rack shaft 5 is supported inside a housing 10 fixed to a frame 9 of a vehicle body. The rack shaft 5 is movable in a right direction or a left direction with respect to a direction of travel of a vehicle. Both ends of the rack shaft 5 are coupled to right and left steered wheels (not shown) via tie rods (not shown).

The steering shaft 2 includes an outer shaft 11 and an inner shaft 12. The outer shaft 11 and the inner shaft 12 are coupled to each other by, for example, spline coupling. The outer shaft 11 and the inner shaft 12 can rotate together and can move relatively in their axial direction. The steering shaft 2 is disposed so as to be inclined with respect to a front-rear direction of the vehicle with the steering wheel 6 facing upward.

The steering device 1 includes a steering column 15. The steering shaft 2 is inserted through the steering column 15. The steering shaft 2 is supported via a bearing (not shown) so as to be rotatable relative to the steering column 15. The steering column 15 is attached to two frames 13, 14 provided on the vehicle body. One frame 13 is positioned behind the other frame 14 in the front-rear direction of the vehicle.

The steering column 15 includes an upper tube 16, a lower tube 17, and a housing 18. The upper tube 16 has a cylindrical shape. The lower tube 17 has a cylindrical shape and includes a flange 31. The upper tube 16 and the lower tube 17 are fitted together. As an example, the upper tube 16 is inserted into a first end of the lower tube 17. The first end is an end opposite to a second end with the flange 31. The upper tube 16 and the lower tube 17 can move relative to each other in the axial direction of the steering shaft 2. The lower tube 17 includes a column bracket 17A. The lower tube 17 is attached to the frame 13 of the vehicle body via the column bracket 17A.

The upper tube 16 and the lower tube 17 constitute a support tube that rotatably supports the steering shaft 2. The housing 18 is coupled to the second end of the lower tube 17. The housing 18 includes two support portions 18A (only one is shown in FIG. 1) and a support shaft 18B. The two support portions 18A are provided on the side surface of the housing 18 opposite to the lower tube 17. The two support portions 18A face each other in a width direction of the vehicle body. The support shaft 18B extends between the two support portions 18A. The support shaft 18B is rotatably coupled to a bracket 24 fixed to the frame 14 of the vehicle body.

A motor 19 that assists in steering is provided outside the housing 18. A speed reducer 20 is housed inside the housing 18. The speed reducer 20 reduces the speed of rotation of the motor 19, and transmits the resultant rotation to the inner shaft 12. The speed reducer 20 is a worm speed reducer that includes a worm 21 and a worm wheel 22. The worm 21 is coupled to an output shaft (not shown) of the motor 19 so as to be rotatable together with the output shaft. The axis of the worm 21 and the axis of the output shaft of the motor 19 are on the same line. The worm wheel 22 meshes with the worm 21. The worm wheel 22 is provided so as to be rotatable together with the inner shaft 12. The axis of the worm wheel 22 and the axis of the inner shaft 12 are on the same line.

The steering device 1 includes a lock mechanism (not shown). The lock mechanism selectively locks and unlocks swing of the steering column 15 about the support shaft 18B and telescopic motion of the steering column 15 through an operation on a lever (not shown). The unlocking operation of the lever allows the steering column 15 to swing relative to the column bracket 17A about the support shaft 18B. The vertical position of the steering wheel 6 can be adjusted by performing the unlocking operation of the lever and then moving the steering wheel 6 up or down. The unlocking operation of the lever also allows the upper tube 16 to move in the axial direction of the steering shaft 2 relative to the lower tube 17. The axial position of the steering wheel 6 can be adjusted by performing the unlocking operation of the lever and then moving the steering wheel 6 in the axial direction of the steering shaft 2.

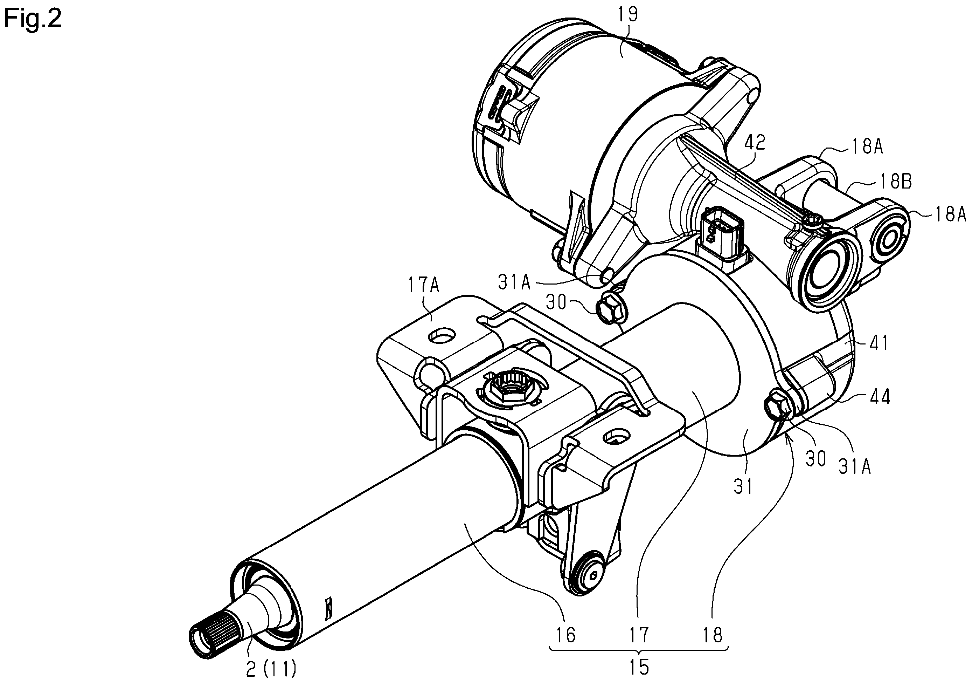

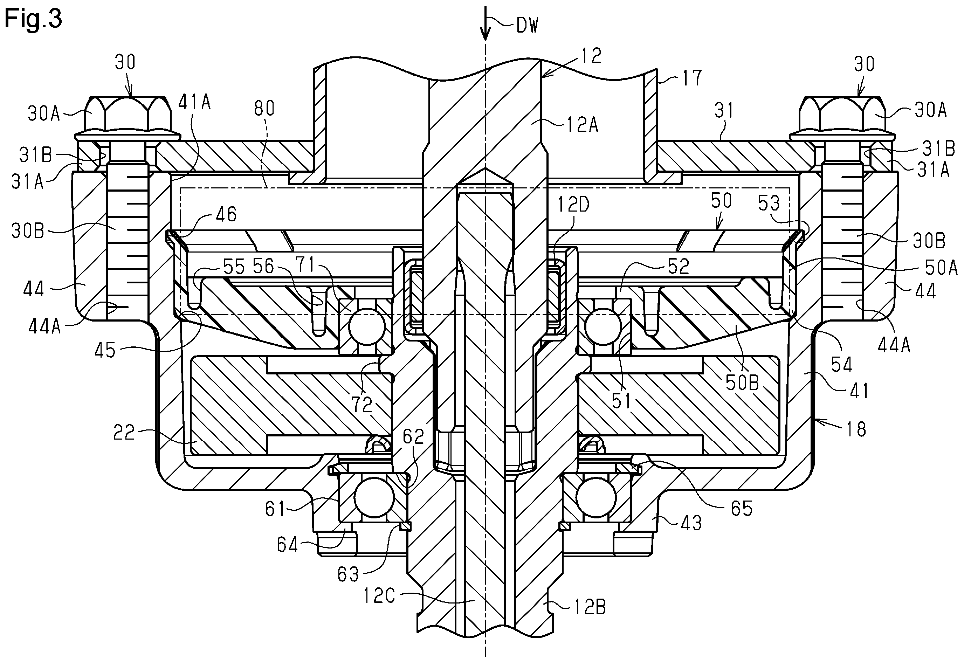

Next, the configuration of the lower tube 17 will be described in detail. As shown in FIG. 2, the lower tube 17 includes the flange 31. The flange 31 is provided at the second end of the lower tube 17. The second end of the lower tube 17 is an end opposite to the first end into which the upper tube 16 is inserted. The flange 31 is a flat plate in a circular ring shape. The flange 31 includes two attachment portions 31A. The two attachment portions 31A are provided on the outer peripheral surface of the flange 31. The two attachment portions 31A protrude radially outward from the outer peripheral surface of the flange 31. The two attachment portions 31A are positioned opposite to each other in the radial direction of the flange 31. As shown in FIG. 3, the two attachment portions 31A each have an insertion hole 31B. Bolts 30 are inserted through the insertion holes 31B. The flange 31 is fixed to the housing 18 by tightening the bolts 30 to the housing 18. The bolts 30 each include a head portion 30A and a shaft portion 30B.

Next, the configuration of the housing 18 will be described in detail. As shown in FIG. 2, the housing 18 includes a worm wheel housing member 41 and a worm housing member 42. Each of the worm wheel housing member 41 and the worm housing member 42 has a cylindrical shape. The worm housing member 42 is coupled to the outer peripheral surface of the worm wheel housing member 41. The worm housing member 42 extends in a direction orthogonal to the axis of the worm wheel housing member 41. The inside of the worm wheel housing member 41 and the inside of the worm housing member 42 communicate with each other via a communication hole (not shown). The worm wheel housing member 41 constitutes a cylindrical portion of the housing 18. The housing 18 is made of metal such as aluminum.

The worm wheel 22 is rotatably housed inside the worm wheel housing member 41. The worm 21 is rotatably supported inside the worm housing member 42 via a bearing (not shown). The worm wheel 22 and the worm 21 mesh with each other via the communication hole inside the housing 18.

As shown in FIG. 3, the worm wheel housing member 41 has an opening 41A at its first end in the axial direction, and has an end wall at its second end opposite to the first end. The opening 41A is open to the lower tube 17 along the axis of the worm wheel housing member 41. The outside diameter of the worm wheel housing member 41 is substantially the same as the outside diameter of the flange 31.

The worm wheel housing member 41 includes a cylindrical bearing support portion 43. The bearing support portion 43 is provided on the end wall of the worm wheel housing member 41. The opening 41A and the bearing support portion 43 are positioned coaxially. The inside of the worm wheel housing member 41 and the outside of the worm wheel housing member 41 communicate with each other via the bearing support portion 43.

The worm wheel housing member 41 includes two tightening portions 44. The tightening portions 44 are portions to which the bolts 30 are tightened when fixing the flange 31 to the housing 18. The tightening portions 44 protrude radially outward from the outer peripheral surface of the worm wheel housing member 41. The two tightening portions 44 are positioned opposite to each other in the radial direction of the worm wheel housing member 41. The tightening portions 44 each have a screw hole 44A. End faces of the tightening portions 44 in which the screw holes 44A open are flush with an end face of the worm wheel housing member 41 in which the opening 41A opens.

The peripheral edge of the flange 31 abuts against the end face of the worm wheel housing member 41 in which the opening 41A opens. The insertion hole 31B of the flange 31 and the screw hole 44A of the housing 18 are aligned with each other. The bolt 30 is inserted through the insertion hole 31B of the flange 31 from the side opposite to the housing 18. The bolt 30 is tightened to the tightening portion 44 of the housing 18. Thus, the flange 31 is fixed to the housing 18. That is, the lower tube 17 is coupled to the housing 18 via the flange 31. The opening 41A of the housing 18 is closed by the flange 31. The flange 31 serves also as a cover that closes the opening 41A of the housing 18.

The worm wheel housing member 41 rotatably supports the inner shaft 12. The inner shaft 12 extends through the worm wheel housing member 41. The axis of the inner shaft 12 and the axis of the worm wheel housing member 41 are on the same line. The inner shaft 12 includes an input shaft 12A, an output shaft 12B, and a torsion bar 12C. The input shaft 12A and the output shaft 12B are coupled to each other via the torsion bar 12C. The output shaft 12B is a hollow cylinder.

A first end of the input shaft 12A is coupled to the outer shaft 11. A second end of the input shaft 12A is inserted into a first end of the output shaft 12B. A clearance is present between the outer peripheral surface of the input shaft 12A and the inner peripheral surface of the output shaft 12B. A plain bearing 12D is interposed between the outer peripheral surface of the input shaft 12A and the inner peripheral surface of the output shaft 12B. The input shaft 12A and the output shaft 12B can rotate relative to each other via the plain bearing 12D.

A first end of the torsion bar 12C is inserted and fixed to the second end of the input shaft 12A. A second end of the torsion bar 12C is inserted through the output shaft 12B. A clearance is present between the outer peripheral surface of the torsion bar 12C and the inner peripheral surface of the output shaft 12B. The second end of the torsion bar 12C is fixed to a second end of the output shaft 12B. A steering torque applied to the steering wheel 6 is transmitted to the output shaft 12B via the input shaft 12A and the torsion bar 12C. The torsion bar 12C twists depending on the steering torque.

The worm wheel 22 and a bearing support member 50 are housed inside the worm wheel housing member 41. The worm wheel 22 is fixed to the outer peripheral surface of the output shaft 12B so as to be rotatable together. The bearing support member 50 has a cylindrical shape and is attached so as to be rotatable relative to the outer peripheral surface of the output shaft 12B. The worm wheel 22 and the bearing support member 50 are arranged away from each other along the axial direction of the worm wheel housing member 41. The worm wheel 22 is disposed between the bearing support member 50 and the end wall of the worm wheel housing member 41. The worm wheel housing member 41, the worm wheel 22, and the bearing support member 50 are positioned coaxially.

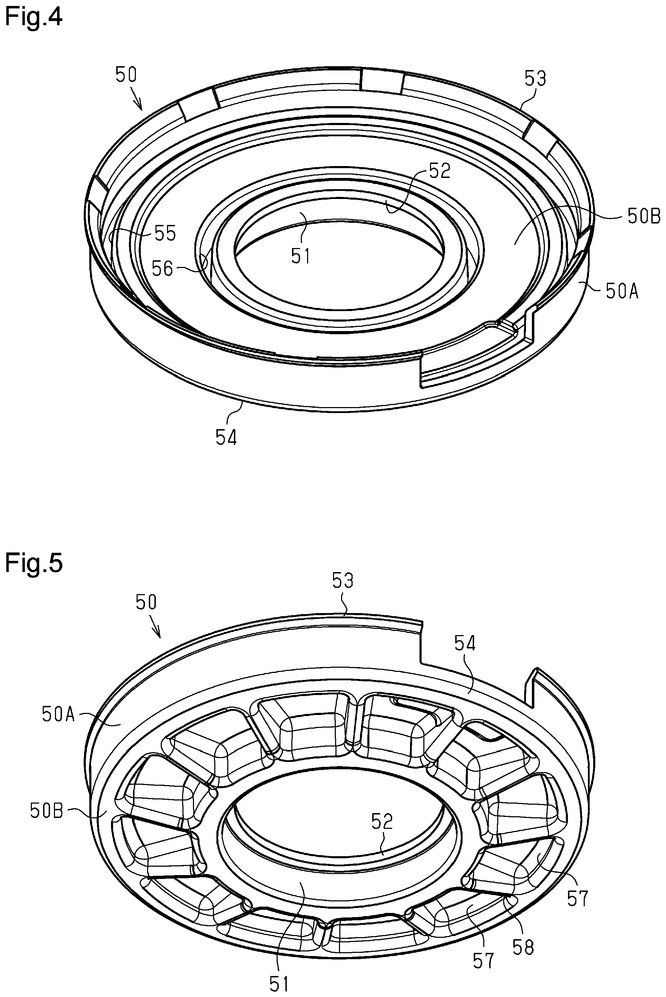

As shown in FIGS. 4 and 5, the bearing support member 50 includes a peripheral wall 50A and an end wall 50B extending radially inward from a first end of the peripheral wall 50A in the axial direction. The end wall 50B is a wall portion of the bearing support member 50 that extends in the radial direction. The peripheral wall 50A has a second end that is an open end opposite to the first end. The bearing support member 50 has an insertion hole 51. The insertion hole 51 extends through the center of the end wall 50B of the bearing support member 50. An annular inward protruding thread 52 is provided on the inner peripheral surface of the end wall 50B. The inward protruding thread 52 extends in a circumferential direction along the inner peripheral surface of the bearing support member 50, more specifically, along the inner peripheral surface of the end wall 50B. The inward protruding thread 52 is flush with the inner surface of the end wall 50B of the bearing support member 50. The bearing support member 50 includes an annular outward protruding thread 53. The outward protruding thread 53 is provided at an end of the bearing support member 50 in the axial direction, more specifically, at a second end of the peripheral wall 50A. The outward protruding thread 53 extends in the circumferential direction along the outer peripheral surface of the peripheral wall 50A. The outward protruding thread 53 is inclined closer to the flange 31 toward the radially outer side of the bearing support member 50. The bearing support member 50 is made of, for example, synthetic resin. That is, the linear thermal expansion coefficients of the bearing support member 50 and the housing 18 are different from each other. The linear thermal expansion coefficient of the synthetic resin is larger than the linear thermal expansion coefficient of the metal.

As shown in FIG. 3, the outer peripheral surface of the bearing support member 50, that is, the outer peripheral surface of the end wall 50B is fitted to the inner peripheral surface of the worm wheel housing member 41. The bearing support member 50 includes a corner 54 formed at an intersection of the end wall 50B and the peripheral wall 50A. The corner 54 abuts, in an attachment direction DW, against an annular stepped portion 45 provided on the inner peripheral surface of the worm wheel housing member 41. The attachment direction DW is a direction along the axis of the worm wheel housing member 41 and is a direction in which the bearing support member 50 is inserted into the worm wheel housing member 41. The stepped portion 45 is provided at a part where the bore diameter of the worm wheel housing member 41 changes, and extends in the circumferential direction along the inner peripheral surface of the worm wheel housing member 41. When the corner 54 abuts against the stepped portion 45, the movement of the bearing support member 50 relative to the worm wheel housing member 41 in the attachment direction DW is restricted. The outward protruding thread 53 is engaged in an annular groove 46 provided on the inner peripheral surface of the worm wheel housing member 41. The groove 46 extends in the circumferential direction along the inner peripheral surface of the worm wheel housing member 41. When the outward protruding thread 53 abuts against the groove 46 in a direction opposite to the attachment direction DW, the movement of the bearing support member 50 relative to the worm wheel housing member 41 in the direction opposite to the attachment direction DW is restricted.

The output shaft 12B is supported via a bearing 61 so as to be rotatable relative to the inner peripheral surface of the bearing support portion 43. The bearing 61 is in a state in which movement in the axial direction is restricted. An annular stepped portion 62 and a snap ring 63 are provided on the outer peripheral surface of the output shaft 12B. An inner ring of the bearing 61 is interposed between the stepped portion 62 and the snap ring 63. An annular protrusion 64 and a snap ring 65 are provided on the inner peripheral surface of the bearing support portion 43. An outer ring of the bearing 61 is interposed between the protrusion 64 and the snap ring 65.

The output shaft 12B is supported via a bearing 71 so as to be rotatable relative to the insertion hole 51 of the bearing support member 50. The bearing 71 is in a state in which movement in the axial direction is restricted. An annular protruding thread 72 is provided on the outer peripheral surface of the output shaft 12B. An inner ring of the bearing 71 abuts against the protruding thread 72 in the attachment direction DW. An outer ring of the bearing 71 abuts against the annular inward protruding thread 52 of the bearing support member 50 in a direction opposite to the attachment direction DW.

The movement of the bearing support member 50 in the attachment direction DW is restricted by the abutment of the annular inward protruding thread 52 against the outer ring of the bearing 71 in the attachment direction DW as well as the abutment of the corner 54 of the bearing support member 50 against the annular stepped portion 45.

The internal space of the worm wheel housing member 41 is partitioned into two spaces by the bearing support member 50. A sensor 80 is provided in a space between the bearing support member 50 and the flange 31. The sensor 80 includes a torque sensor and a rotation angle sensor. The torque sensor detects a steering torque based on the amount of twist of the torsion bar 12C. The rotation angle sensor detects a rotation angle of the input shaft 12A as a steering angle. Grease is sealed in a space between the bearing support member 50 and the end wall of the worm wheel housing member 41.

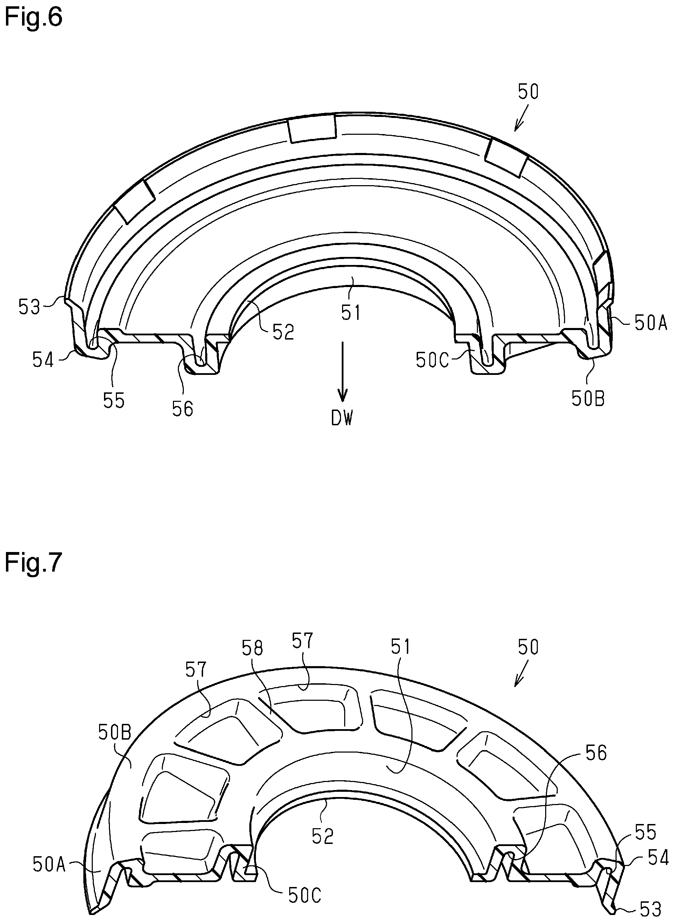

Next, supplementary description will be given about the configuration of the bearing support member 50. As shown in FIG. 6, the bearing support member 50 has a first slit 55 and a second slit 56. The first slit 55 and the second slit 56 are provided in the end wall 50B. Specifically, the first slit 55 and the second slit 56 are provided on a first end face of the end wall 50B in the axial direction. The first end face is an end face of the end wall 50B on a side where the peripheral wall 50A protrudes in the axial direction. The first end face is orthogonal to the axial direction.

The first slit 55 and the second slit 56 are annular grooves extending in the circumferential direction. The first slit 55 and the second slit 56 are open in a direction opposite to the attachment direction DW of the bearing support member 50. The first slit 55 and the second slit 56 are provided concentrically about the axis of the bearing support member 50.

The first slit 55 is positioned on a radially outer side of the second slit 56. The first slit 55 extends in the circumferential direction along the outer peripheral surface of the bearing support member 50. The first slit 55 also extends along the inner peripheral surface of the peripheral wall 50A. The first slit 55 has annular inner wall surfaces facing each other in the radial direction. The radially outer inner wall surface is continuous with the inner peripheral surface of the peripheral wall 50A without any step.

The second slit 56 is positioned on a radially inner side of the first slit 55. The second slit 56 surrounds the insertion hole 51. The second slit 56 extends in the circumferential direction along the inner peripheral surface of the insertion hole 51. The inner peripheral surface of the insertion hole 51 is also the inner peripheral surface of the bearing support member 50. By providing the second slit 56 in the end wall 50B, an annular inner peripheral wall 50C is formed.

The first slit 55 and the second slit 56 constitute a deformation allowing portion that allows elastic deformation of the bearing support member 50 in the radial direction. As shown in FIG. 7, the bearing support member 50 has a plurality of recesses 57. The recesses 57 are provided on a second end face of the end wall 50B in the axial direction. The second end face is an end face opposite to the first end face in the axial direction. The recesses 57 are provided away from each other in the circumferential direction of the end wall 50B. The recesses 57 are positioned in a region between the first slit 55 and the second slit 56 on the second end face when viewed in the axial direction.

The bearing support member 50 includes a plurality of ribs 58. The ribs 58 are for reinforcement. By providing the plurality of recesses 57 in the end wall 50B, the plurality of ribs 58 is provided. The rib 58 is a part of the bearing support member 50 between two recesses 57 adjacent in the circumferential direction. The rib 58 is a wall extending in the radial direction of the end wall 50B. The rib 58 couples a radially outer portion of the end wall 50B where the first slit 55 is provided and a radially inner portion of the end wall 50B where the second slit 56 is provided.

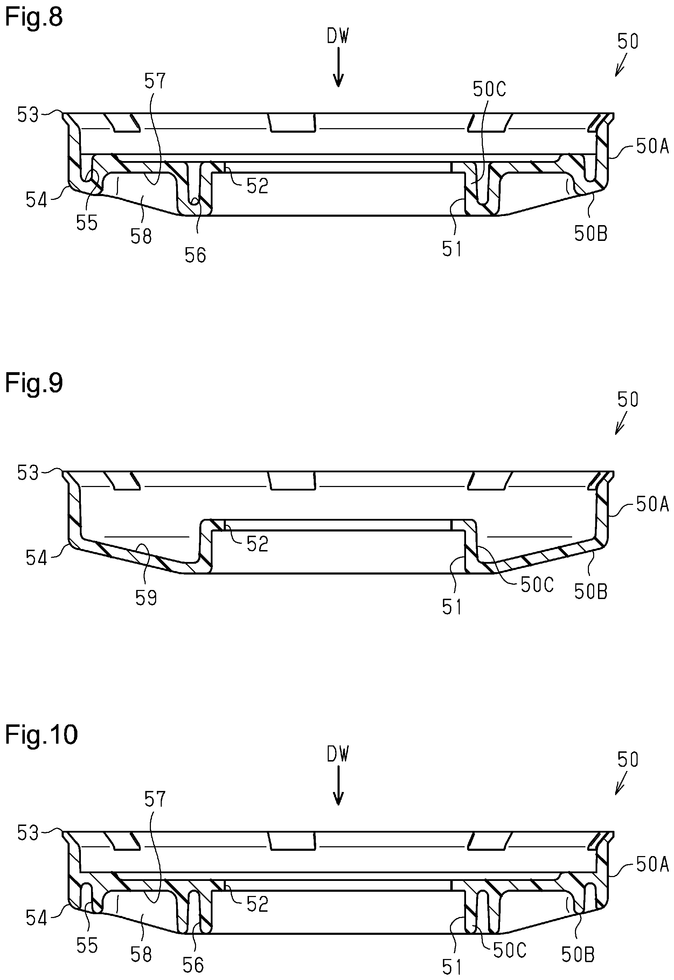

As shown in FIG. 8, the thickness of the resin of the bearing support member 50 is substantially uniform. The dimensions of each part of the bearing support member 50 are set from the viewpoint of keeping the uniform resin thickness of the bearing support member 50. The dimensions of each part include, for example, the following seven dimensions (A1) to (A7).
A1. Depth of first slit 55
A2. Width of first slit 55
A3. Depth of second slit 56
A4. Width of second slit 56
A5. Depth of recess 57
A6. Width of recess 57
A7. Circumferential length of recess 57
The depth is a dimension in the axial direction. The width is a dimension in the radial direction. By adjusting the dimensions (A1) to (A7), it is possible to adjust the resin thickness of the bearing support member 50 having the first slit 55, the second slit 56, and the recesses 57. By adjusting the dimension (A7), it is possible to adjust the thickness that is the circumferential length of the rib 58.

### <Effects of Embodiment>

The present embodiment has the following effects.
(1) Hitherto, there is a steering device including the following housing. The conventional housing includes, for example, a worm housing member that houses a speed reducer, and a cylindrical sensor housing member that houses a sensor. The steering shaft is rotatably supported by a bearing provided on the worm housing member and a bearing provided on the sensor housing member. A cylindrical member that encloses the steering shaft is attached to the sensor housing member. This cylindrical member corresponds to the lower tube 17 of the present embodiment.
   According to the present embodiment, the bearing support member 50 that is a member for supporting the bearing 71 and the flange 31 that is a member for coupling the lower tube 17 to the housing 18 are provided as separate components independent of each other. The bearing support member 50 is attached inside the worm wheel housing member 41. The lower tube 17 is fixed to the worm wheel housing member 41 via the flange 31. As described above, according to the present embodiment, it is possible to obtain a novel steering device 1 that does not have a configuration corresponding to the conventional sensor housing member.
(2) The conventional worm housing member and the conventional sensor housing member are expensive because they are made of metal such as aluminum. In this regard, in the present embodiment, the bearing 71 is supported by the bearing support member 50 made of synthetic resin instead of the conventional sensor housing member. Compared to the case where the conventional sensor housing member is provided, the product cost can be reduced by the amount of reduction of the metal used for the housing.
(3) The lower tube 17 is directly fixed to the worm wheel housing member 41 via the plate-shaped flange 31. Therefore, it is possible to reduce the size of the steering column 15 in the axial direction compared to the case where the lower tube 17 is attached to the worm wheel housing member 41 via the configuration corresponding to the conventional sensor housing member.
(4) The bearing support member 50 is kept fitted to the inner peripheral surface of the worm wheel housing member 41. Fastening components such as bolts for fixing the bearing support member 50 to the worm wheel housing member 41 are not necessary. Therefore, the number of components can be reduced.
(5) The bearing support member 50 is kept in a state in which the movement in the axial direction is restricted. The outward protruding thread 53 and the groove 46 that serve as engagement portions engage with each other in the axial direction of the bearing support member 50, thereby restricting the movement of the bearing support member 50 in the direction opposite to the attachment direction DW. Further, the corner 54 and the stepped portion 45 that serve as engagement portions engage with each other in the axial direction of the bearing support member 50 or the inward protruding thread 52 and the outer ring of the bearing 71 engage with each other in the axial direction of the bearing support member 50, thereby restricting the movement of the bearing support member 50 in the attachment direction DW. Therefore, it is possible to reduce the occurrence of a case where the bearing support member 50 falls off from the bearing 71 in the axial direction. Thus, the bearing support member 50 is kept in a state in which the bearing 71 is suitably supported. Furthermore, the bearing support member 50 can be attached to the worm wheel housing member 41 with one touch in the attachment direction DW. Therefore, the ease of attachment is improved.
(6) The linear thermal expansion coefficients of the bearing support member 50 and the housing 18 are different from each other. Therefore, the bearing support member 50 and the housing 18 are different from each other in terms of degrees of dimensional change with respect to change in ambient temperature. For example, if the linear thermal expansion coefficient of the bearing support member 50 is larger than the linear thermal expansion coefficient of the housing 18, there is a possibility that the bearing support member 50 will contract more than the housing 18 as the ambient temperature decreases. Along with the contraction of the bearing support member 50 in the radial direction, there is a concern that a gap may be created between the outer peripheral surface of the bearing support member 50 and the inner peripheral surface of the worm wheel housing member 41.
   In this regard, according to the present embodiment, even if the gap is created between the outer peripheral surface of the bearing support member 50 and the inner peripheral surface of the worm wheel housing member 41, the movement of the bearing support member 50 in the direction opposite to the attachment direction DW is restricted unless the outward protruding thread 53 and the groove 46 are disengaged. Further, the movement of the bearing support member 50 in the attachment direction DW is restricted unless the corner 54 and the stepped portion 45 or the inward protruding thread 52 and the outer ring of the bearing 71 are disengaged. Therefore, the bearing support member 50 is kept in a state in which the bearing 71 is supported.
(7) Since the worm wheel 22, the bearing support member 50, and the sensor 80 can be disposed inside the housing 18, there is no need to house the sensor in the sensor housing member separate from the conventional worm housing member. Therefore, the ease of attachment is improved. Since the worm wheel 22, the bearing support member 50, and the sensor 80 can be attached to the worm wheel housing member 41 in unidirectionally in the attachment direction DW, the ease of attachment is improved.
(8) The bearing support member 50 has the annular first slit 55. The first slit 55 extends in the circumferential direction along the inner peripheral surface of the peripheral wall 50A. Since the first slit 55 is present on the radially inner side of the peripheral wall 50A, the peripheral wall 50A is easily elastically deformed in the radial direction. When attaching the bearing support member 50 to the worm wheel housing member 41, the outward protruding thread 53 comes into contact with the inner peripheral surface of the worm wheel housing member 41. Therefore, a radially inward force acts on the peripheral wall 50A via the outward protruding thread 53. In response to this force, the peripheral wall 50A is elastically deformed radially inward with the first end as a fulcrum. Therefore, the outward protruding thread 53 retreats radially inward. Since the bearing support member 50 is easily inserted into the worm wheel housing member 41, the ease of attachment is improved. The occurrence of cracks in the peripheral wall 50A of the bearing support member 50 is also suppressed.
(9) When attaching the bearing support member 50 to the inside of the worm wheel housing member 41, the distal end of the outward protruding thread 53 slides in the attachment direction DW relative to the inner peripheral surface of the worm wheel housing member 41 as the bearing support member 50 moves in the attachment direction DW. The peripheral wall 50A elastically returns to its original position at a timing when the distal end of the outward protruding thread 53 reaches the groove 46. Thus, the distal end of the outward protruding thread 53 is fitted to the groove 46. Therefore, the distal end of the outward protruding thread 53 can be attached to the groove 46 by simply inserting the bearing support member 50 into the worm wheel housing member 41 in the attachment direction DW. Accordingly, the ease of attachment of the bearing support member 50 to the worm wheel housing member 41 is improved.
(10) With the distal end of the outward protruding thread 53 fitted to the groove 46, the outer peripheral surface of the peripheral wall 50A is kept in contact with the inner peripheral surface of the worm wheel housing member 41. There is ideally no gap between the outer peripheral surface of the peripheral wall 50A and the inner peripheral surface of the worm wheel housing member 41. Therefore, it is difficult for grease to pass through the boundary between the outer peripheral surface of the peripheral wall 50A and the inner peripheral surface of the worm wheel housing member 41. Therefore, the leakage of grease from a first space between the bearing support member 50 and the end wall of the worm wheel housing member 41 to a second space between the bearing support member 50 and the flange 31 is suppressed.
(11) The bearing support member 50 has the annular second slit 56. The second slit 56 extends in the circumferential direction along the inner peripheral surface of the insertion hole 51. By providing the second slit 56, the annular inner peripheral wall 50C is provided. Since the second slit 56 is present on the radially outer side of the inner peripheral wall 50C, the inner peripheral wall 50C is easily elastically deformed in the radial direction. The inner peripheral wall 50C is a wall that constitutes the insertion hole 51. When attaching the bearing support member 50 to the inside of the worm wheel housing member 41, the inner peripheral wall 50C of the bearing support member 50 is elastically deformed radially outward. Therefore, the inner peripheral surface of the insertion hole 51 is easily fitted to the outer peripheral surface of the outer ring of the bearing 71. The occurrence of cracks near the insertion hole 51 of the bearing support member 50 is also suppressed. Accordingly, the ease of attachment of the bearing support member 50 to the worm wheel housing member 41 is improved.
(12) The inner peripheral surface of the insertion hole 51 is kept in contact with the outer peripheral surface of the outer ring of the bearing 71. There is ideally no gap between the inner peripheral surface of the insertion hole 51 and the outer peripheral surface of the outer ring of the bearing 71. Therefore, the occurrence of hitting noise or stick-slip noise between the bearing support member 50 and the bearing 71 is suppressed. The stick-slip noise is abnormal noise that occurs when components that are herein the bearing support member 50 and the bearing 71 rub against each other. Thus, the quietness of the steering device 1 can be improved. It is difficult for grease to pass through the boundary between the inner peripheral surface of the insertion hole 51 and the outer peripheral surface of the outer ring of the bearing 71. Therefore, the leakage of grease from the first space between the bearing support member 50 and the end wall of the worm wheel housing member 41 to the second space between the bearing support member 50 and the flange 31 is suppressed.
(13) The bearing support member 50 is a resin molded product manufactured by injection molding. The injection molding is a molding technique in which a resin molded product is obtained by injecting molten resin into a mold and cooling and curing the molten resin. In the injection molding, if there is a difference in the thickness of the resin molded product, the degree of shrinkage varies. Therefore, sink marks are created in a thick part. The sink mark is a phenomenon in which a thicker part contracts more than a thinner part when a resin molded product is cooled and cured inside a mold, resulting in a dent on the surface of the thicker part.
   The bearing support member 50 has the first slit 55, the second slit 56, and the recesses 57. The first slit 55, the second slit 56, and the recesses 57 serve also as so-called thinning portions for keeping a uniform resin thickness of the bearing support member 50. By adjusting the dimensions of the first slit 55, the second slit 56, and the recesses 57, the resin thickness of the bearing support member 50 can be made nearly uniform. Therefore, the creation of sink marks in the bearing support member 50 is suppressed. Moreover, the moldability and productivity of the bearing support member 50 are improved.
(14) By providing the first slit 55, the second slit 56, and the recesses 57 in the bearing support member 50, the strength of the bearing support member 50 may decrease. The decrease in the strength is compensated by the plurality of ribs 58. That is, the strength of the bearing support member 50 can be ensured by the plurality of ribs 58.

### <Other Embodiments>

The present embodiment may be modified as follows.
- The materials of the bearing support member 50 and the housing 18 are changed as appropriate depending on the specifications of the product. For example, the bearing support member 50 may be made of metal, and the housing 18 may be made of synthetic resin.
   - The bearing support member 50 and the housing 18 may be made of the same material. In this case, the linear thermal expansion coefficients of the bearing support member 50 and the housing 18 are the same value. Therefore, the dimensions of the bearing support member 50 and the housing 18 change in the same manner as the ambient temperature changes. Therefore, a gap is hardly created between the outer peripheral surface of the bearing support member 50 and the inner peripheral surface of the worm wheel housing member 41.
   - A configuration in which the stepped portion 45 is omitted from the worm wheel housing member 41 may be adopted. Even in this case, the inward protruding thread 52 of the bearing support member 50 and the outer ring of the bearing 71 engage with each other, thereby restricting the movement of the bearing support member 50 in the attachment direction DW.
   - A configuration in which the annular inward protruding thread 52 is omitted from the bearing support member 50 may be adopted. Even in this case, the corner 54 of the bearing support member 50 and the stepped portion 45 of the worm wheel housing member 41 engage with each other, thereby restricting the movement of the bearing support member 50 in the attachment direction DW.
   - Depending on the product specifications or the like, the steering device 1 need not be provided with the configuration for adjusting the vertical position of the steering wheel 6 or the configuration for adjusting the position of the steering wheel 6 in the axial direction. In this case, a non-telescopic single support tube is provided in place of the upper tube 16 and the lower tube 17. This single support tube rotatably supports the steering shaft 2. The housing 18 is fixed to the frame 14 of the vehicle body. A configuration in which the support portions 18A and the support shaft 18B are omitted from the housing 18 may be adopted. In addition, there is no need for the lock mechanism that selectively locks and unlocks swing of the steering column 15 about the support shaft 18B and telescopic motion of the steering column 15.
   - As shown in FIG. 10, the first slit 55 and the second slit 56 may be provided on the second end face of the end wall 50B. In this case, the first slit 55 and the second slit 56 are open in the same direction as the attachment direction DW of the bearing support member 50. Even in this case, the same effects as in (8) to (14) above can be obtained.
   - The first slit 55 may be provided on the first end face of the end wall 50B, and the second slit 56 may be provided on the second end face of the end wall 50B. The first slit 55 may be provided on the second end face of the end wall 50B, and the second slit 56 may be provided on the first end face of the end wall 50B. Even in this case, the same effects as in (8) to (14) above can be obtained.
   - As the bearing support member 50, a configuration in which the second slit 56 is omitted may be adopted. The part where the second slit 56 is provided is filled with synthetic resin. Even in this case, the same effects as in (8) to (10) and (12) to (14) above can be obtained.
   - As shown in FIG. 9, the bearing support member 50 may have a third slit 59 instead of the first slit 55 and the second slit 56. The recesses 57 may be omitted. The third slit 59 is an annular groove extending in the circumferential direction of the end wall 50B. The third slit 59 is provided, for example, in the form of coupling the first slit 55 and the second slit 56 in the radial direction. The outside diameter of the third slit 59 is set approximately the same as the outside diameter of the first slit 55. The bore diameter of the third slit 59 is set approximately the same as the bore diameter of the second slit 56. The depth and width of the third slit 59 are adjusted so that the resin thickness of the bearing support member 50 is substantially uniform. The third slit 59 constitutes the deformation allowing portion that allows elastic deformation of the bearing support member 50 in the radial direction. Even in this case, the same effects as in (8) to (13) above can be obtained.
   - As the bearing support member 50, a configuration in which the ribs 58 are omitted may be adopted. In this case, the plurality of recesses 57 constitutes a single annular recess by being coupled in the circumferential direction. Even in this case, the same effects as in (8) to (13) above can be obtained.

## Claims

1. A steering device (1) comprising:
a cylindrical support tube that includes a flange (31) and that rotatably supports a steering shaft (2);
a speed reducer (20) configured to apply a torque to the steering shaft (2);
a housing (18) that includes a cylindrical portion housing the speed reducer (20), the cylindrical portion being disposed coaxially with the flange (31);
a bolt (30) that couples the flange (31) and the cylindrical portion to each other;
a bearing support member (50) that is fitted to an inner peripheral surface of the cylindrical portion and through which the steering shaft (2) extends; and
a bearing (71) interposed between an outer peripheral surface of the steering shaft (2) and an inner peripheral surface of the bearing support member (50), wherein
the bearing support member (50) includes a wall portion extending in the radial direction, and a deformation allowing portion configured to allow elastic deformation of the bearing support member (50) in the radial direction,
the deformation allowing portion includes a first slit (55) provided in the wall portion, and
the first slit (55) is an annular groove extending continuously in a circumferential direction along an outer peripheral surface of the bearing support member (50),
**characterized in that**
the deformation allowing portion further includes a second slit (56) provided in the wall portion, and
the second slit (56) is an annular groove positioned on a radially inner side with respect to the first slit (55) and extending continuously in the circumferential direction along the inner peripheral surface of the bearing support member (50).

2. The steering device (1) according to claim 1, wherein:
the bearing support member (50) includes a peripheral wall (50A), and the wall portion is an end wall (50B) extending radially inward from an end of the peripheral wall (50A) in an axial direction;
the end wall (50B) includes a first end face and a second end face positioned opposite to each other in the axial direction; and
the first slit (55) and the second slit (56) are provided on one same end face out of the first end face and the second end face, or are provided on different end faces out of the first end face and the second end face.

3. The steering device (1) according to claim 2, wherein:
the first end face includes the first slit (55) and the second slit (56); and
the second end face includes:
a plurality of recesses (57) provided away from each other in the circumferential direction in a region of the second end face between the first slit (55) and the second slit (56); and
a plurality of ribs (58) that is parts of the bearing support member (50) between the two recesses (57) adjacent in the circumferential direction.

4. The steering device (1) according to any one of claims 1 to 3, wherein the bearing support member (50) and the cylindrical portion include engagement portions that engage with each other in an axial direction of the bearing support member (50).

5. The steering device (1) according to claim 4, wherein:
the engagement portions include an outward protruding thread (53) extending in the circumferential direction along the outer peripheral surface of the bearing support member (50), and a groove (46) extending in the circumferential direction along the inner peripheral surface of the cylindrical portion; and
the outward protruding thread (53) engages with the groove (46) in the axial direction of the bearing support member (50).

6. The steering device (1) according to claim 4 or 5, wherein:
the bearing support member (50) includes a peripheral wall (50A), an end wall (50B) extending radially inward from an end of the peripheral wall (50A) in the axial direction, and a corner (54) formed at a part where the peripheral wall (50A) and the end wall (50B) intersect each other;
the engagement portions include a stepped portion (45) extending in the circumferential direction along the inner peripheral surface of the cylindrical portion, and the corner (54) of the bearing support member (50); and
the corner (54) engages with the stepped portion (45) in the axial direction of the bearing support member (50).

7. The steering device (1) according to any one of claims 1 to 6, wherein:
the bearing support member (50) includes an inward protruding thread (52) extending in the circumferential direction along the inner peripheral surface of the bearing support member (50); and
the inward protruding thread (52) engages with the bearing (71) in an axial direction of the bearing support member (50).

8. The steering device (1) according to any one of claims 1 to 7, wherein the bearing support member (50) and the housing (18) have different linear thermal expansion coefficients.

9. The steering device (1) according to any one of claims 1 to 8, wherein:
the speed reducer (20) includes a worm wheel (22) configured to rotate together with the steering shaft (2), and a worm (21) that meshes with the worm wheel (22);
the housing (18) includes a worm wheel housing member (41) housing the worm wheel (22), and a worm housing member (42) housing the worm (21); and
the cylindrical portion is the worm wheel housing member (41).

## Patentansprüche

1. Lenkvorrichtung (1) mit:
einem zylindrischen Stützrohr, das einen Flansch (31) umfasst und eine Lenkwelle (2) drehbar stützt;
einem Drehzahlminderer (20), der so konfiguriert ist, dass er ein Drehmoment auf die Lenkwelle (2) ausübt;
einem Gehäuse (18), das einen zylindrischen Abschnitt aufweist, der den Drehzahlminderer (20) aufnimmt, wobei der zylindrische Abschnitt koaxial zum Flansch (31) angeordnet ist;
einer Schraube (30), die den Flansch (31) und den zylindrischen Abschnitt miteinander verbindet;
einem Lagerstützelement (50), das an einer Innenumfangsfläche des zylindrischen Abschnitts angebracht ist und durch das sich die Lenkwelle (2) erstreckt; und
einem Lager (71), das zwischen einer Außenumfangsfläche der Lenkwelle (2) und einer Innenumfangsfläche des Lagerstützelements (50) angeordnet ist, wobei
das Lagerstützelement (50) einen sich in radialer Richtung erstreckenden Wandabschnitt und einen Verformungsbereich aufweist, der so ausgebildet ist, dass er eine elastische Verformung des Lagerstützelements (50) in radialer Richtung ermöglicht,
der Verformungsbereich einen ersten Schlitz (55) aufweist, der in dem Wandabschnitt vorgesehen ist, und
der erste Schlitz (55) eine ringförmige Nut ist, die sich kontinuierlich in Umfangsrichtung entlang einer Außenumfangsfläche des Lagerstützelements (50) erstreckt,
**dadurch gekennzeichnet, dass**
der Verformungsbereich ferner einen zweiten Schlitz (56) umfasst, der in dem Wandabschnitt vorgesehen ist, und
der zweite Schlitz (56) eine ringförmige Nut ist, die in Bezug auf den ersten Schlitz (55) auf einer radial inneren Seite positioniert ist und sich kontinuierlich in Umfangsrichtung entlang der Innenumfangsfläche des Lagerstützelements (50) erstreckt.

2. Lenkvorrichtung (1) nach Anspruch 1, wobei:
das Lagerstützelement (50) eine Umfangswand (50A) umfasst und der Wandabschnitt eine Stirnwand (50B) ist, die sich von einem Ende der Umfangswand (50A) in axialer Richtung radial nach innen erstreckt;
die Stirnwand (50B) eine erste Stirnfläche und eine zweite Stirnfläche aufweist, die in axialer Richtung einander gegenüberliegen; und
der erste Schlitz (55) und der zweite Schlitz (56) an derselben Stirnfläche aus der ersten Stirnfläche und der zweiten Stirnfläche oder an unterschiedlichen Stirnflächen aus der ersten Stirnfläche und der zweiten Stirnfläche vorgesehen sind.

3. Lenkvorrichtung (1) gemäß Anspruch 2, wobei:
die erste Endfläche den ersten Schlitz (55) und den zweiten Schlitz (56) umfasst; und
die zweite Endfläche umfasst:
eine Vielzahl von Aussparungen (57), die in Umfangsrichtung voneinander beabstandet in einem Bereich der zweiten Endfläche zwischen dem ersten Schlitz (55) und dem zweiten Schlitz (56) vorgesehen sind; und
eine Vielzahl von Rippen (58), die Teile des Lagerstützelements (50) zwischen den beiden in Umfangsrichtung benachbarten Aussparungen (57) sind.

4. Lenkvorrichtung (1) gemäß einem der Ansprüche 1 bis 3, wobei das Lagerstützelement (50) und der zylindrische Abschnitt Eingriffsabschnitte aufweisen, die in axialer Richtung des Lagerstützelements (50) miteinander in Eingriff stehen.

5. Lenkvorrichtung (1) nach Anspruch 4, wobei:
die Eingriffsabschnitte ein nach außen vorstehendes Gewinde (53), das sich in Umfangsrichtung entlang der Außenumfangsfläche des Lagerstützelements (50) erstreckt, und eine Nut (46) umfassen, die sich in Umfangsrichtung entlang der Innenumfangsfläche des zylindrischen Abschnitts erstreckt; und
das nach außen vorstehende Gewinde (53) in Axialrichtung des Lagerstützelements (50) mit der Nut (46) in Eingriff steht.

6. Lenkvorrichtung (1) nach Anspruch 4 oder 5, wobei:
das Lagerstützelement (50) eine Umfangswand (50A), eine Endwand (50B), die sich von einem Ende der Umfangswand (50A) in axialer Richtung radial nach innen erstreckt, und eine Ecke (54) umfasst, die an einer Stelle gebildet ist, an der sich die Umfangswand (50A) und die Endwand (50B) schneiden;
die Eingriffsabschnitte einen Stufenabschnitt (45) umfassen, der sich in Umfangsrichtung entlang der Innenumfangsfläche des zylindrischen Abschnitts und der Ecke (54) des Lagerstützelements (50) erstreckt; und
die Ecke (54) mit dem Stufenabschnitt (45) in Axialrichtung des Lagerstützelements (50) in Eingriff steht.

7. Lenkvorrichtung (1) gemäß einem der Ansprüche 1 bis 6, wobei:
das Lagerstützelement (50) ein nach innen vorstehendes Gewinde (52) aufweist, das sich in Umfangsrichtung entlang der Innenumfangsfläche des Lagerstützelements (50) erstreckt; und
das nach innen vorstehende Gewinde (52) mit dem Lager (71) in axialer Richtung des Lagerstützelements (50) in Eingriff steht.

8. Lenkvorrichtung (1) gemäß einem der Ansprüche 1 bis 7, wobei das Lagerstützelement (50) und das Gehäuse (18) unterschiedliche lineare Wärmeausdehnungskoeffizienten aufweisen.

9. Lenkvorrichtung (1) gemäß einem der Ansprüche 1 bis 8, wobei:
der Drehzahlminderer (20) ein Schneckenrad (22) umfasst, das so konfiguriert ist, dass es sich zusammen mit der Lenkwelle (2) dreht, und eine Schnecke (21) umfasst, die mit dem Schneckenrad (22) kämmt;
das Gehäuse (18) ein Schneckenradgehäuseteil (41), das das Schneckenrad (22) aufnimmt, und ein Schneckengehäuseteil (42), das die Schnecke (21) aufnimmt, umfasst; und
der zylindrische Abschnitt das Schneckenradgehäuseteil (41) ist.

## Revendications

1. Dispositif de direction (1), comprenant :
un tube de support cylindrique qui inclut une bride (31) et qui supporte un arbre de direction (2) de manière rotative ;
un réducteur de vitesse (20) configuré pour appliquer un couple de rotation à l'arbre de direction (2) ;
un boîtier (18) qui inclut une partie cylindrique logeant le réducteur de vitesse (20), la partie cylindrique étant disposée coaxialement avec la bride (31) ; et
un boulon (30) qui relie la bride (31) et la partie cylindrique entre elles ;
un élément de support de palier (50) qui est fixé à une surface périphérique intérieure de la partie cylindrique et à travers lequel passe l'arbre de direction (2) ; et
un palier (71) interposé entre une surface périphérique extérieure de l'arbre de direction (2) et une surface périphérique intérieure de l'élément de support de palier (50), dans lequel
l'élément de support de palier (50) inclut une partie de paroi s'étendant dans la direction radiale et une partie permettant la déformation configurée pour permettre la déformation élastique de l'élément de support de palier (50) dans la direction radiale,
la partie permettant la déformation inclut une première fente (55) prévue dans la partie de paroi, et
la première fente (55) est une rainure annulaire s'étendant de manière continue dans une direction circonférentielle le long d'une surface périphérique extérieure de l'élément de support de palier (50),
**caractérisé en ce que**
la partie permettant la déformation inclut en outre une seconde fente (56) pratiquée dans la partie de paroi, et
la seconde fente (56) est une rainure annulaire positionnée sur un côté radialement intérieur par rapport à la première fente (55) et s'étendant continuellement dans la direction circonférentielle le long de la surface périphérique intérieure de l'élément de support de palier (50).

2. Dispositif de direction (1) selon la revendication 1, dans lequel :
l'élément de support de palier (50) inclut une paroi périphérique (50A), et la partie de paroi est une paroi d'extrémité (50B) s'étendant radialement vers l'intérieur à partir d'une extrémité de la paroi périphérique (50A) dans une direction axiale ;
la paroi d'extrémité (50B) inclut une première face d'extrémité et une seconde face d'extrémité positionnées face à face dans la direction axiale ; et
la première fente (55) et la seconde fente (56) sont prévues sur une même face d'extrémité de la première face d'extrémité et de la seconde face d'extrémité, ou sont prévues sur des faces d'extrémité différentes de la première face d'extrémité et de la seconde face d'extrémité.

3. Dispositif de direction (1) selon la revendication 2, dans lequel :
la première face d'extrémité inclut la première fente (55) et la seconde fente (56) ; et
la seconde face d'extrémité inclut :
une pluralité d'évidements (57) disposés à distance les uns des autres dans la direction circonférentielle dans une région de la seconde face d'extrémité entre la première fente (55) et la seconde fente (56) ; et
une pluralité de nervures (58) qui font partie de l'élément de support de palier (50) entre les deux cavités (57) adjacentes dans la direction circonférentielle.

4. Dispositif de direction (1) selon l'une quelconque des revendications 1 à 3, dans lequel l'élément de support de palier (50) et la partie cylindrique incluent des parties d'engagement qui s'engagent l'une avec l'autre dans une direction axiale de l'élément de support de palier (50).

5. Dispositif de direction (1) selon la revendication 4, dans lequel :
les parties d'engagement incluent un filetage saillant vers l'extérieur (53) s'étendant dans la direction circonférentielle le long de la surface périphérique extérieure de l'élément de support de palier (50), et une rainure (46) s'étendant dans la direction circonférentielle le long de la surface périphérique intérieure de la partie cylindrique ; et
le filetage saillant vers l'extérieur (53) s'engage dans la rainure (46) dans la direction axiale de l'élément de support de palier (50).

6. Dispositif de direction (1) selon la revendication 4 ou 5, dans lequel :
l'élément de support de palier (50) inclut une paroi périphérique (50A), une paroi d'extrémité (50B) s'étendant radialement vers l'intérieur à partir d'une extrémité de la paroi périphérique (50A) dans la direction axiale, et un coin (54) formé à l'endroit où la paroi périphérique (50A) et la paroi d'extrémité (50B) se croisent ;
les parties d'engagement incluent une partie étagée (45) s'étendant dans la direction circonférentielle le long de la surface périphérique intérieure de la partie cylindrique, et le coin (54) de l'élément de support de palier (50) ; et
le coin (54) s'engage avec la partie étagée (45) dans la direction axiale de l'élément de support de palier (50).

7. Dispositif de direction (1) selon l'une quelconque des revendications 1 à 6, dans lequel :
l'élément de support de palier (50) inclut un filetage saillant vers l'intérieur (52) s'étendant dans la direction circonférentielle le long de la surface périphérique intérieure de l'élément de support de palier (50) ; et
le filetage saillant vers l'intérieur (52) s'engage avec le palier (71) dans une direction axiale de l'élément de support de palier (50).

8. Dispositif de direction (1) selon l'une quelconque des revendications 1 à 7, dans lequel l'élément de support de palier (50) et le boîtier (18) présentent des coefficients de dilatation thermique linéaire différents.

9. Dispositif de direction (1) selon l'une quelconque des revendications 1 à 8, dans lequel :
le réducteur de vitesse (20) inclut une roue à vis sans fin (22) configurée pour tourner avec l'arbre de direction (2) et une vis sans fin (21) qui s'engrène avec la roue à vis sans fin (22) ;
le boîtier (18) inclut un élément de boîtier de roue à vis sans fin (41) logeant la roue à vis sans fin (22) et un élément de boîtier de vis sans fin (42) logeant la vis sans fin (21) ; et
la partie cylindrique est l'élément de boîtier de roue à vis sans fin (41).
